# EUROPÄISCHE PATENTSCHRIFT

(11) **EP 1 162 163 B1**
(45) Veröffentlichungstag und Bekanntmachung des Hinweises auf die Patenterteilung: **17.10.2007**
(21) Anmeldenummer: 01810531.2
(22) Anmeldetag: 01.06.2001
(51) Int. Cl.: B65G 47/91

(54) **Greifvorrichtung zum Erfassen von Gegenständen und Verfahren zum Betreiben derselben**
Gripping device for articles and method for operating the same
Dispositif de préhension d'objets et procédé d'utilisation

(30) Priorität: 08.06.2000 CH 113200
(43) Veröffentlichungstag der Anmeldung: 12.12.2001
(73) Patentinhaber: ROBERT BOSCH GMBH, 70442 Stuttgart (DE)
(72) Erfinder: Hüppi, Emil, 8248 Uhwiesen (CH)
(74) Vertreter: Liebetanz, Michael

(56) Entgegenhaltungen:
- EP-A- 0 084 479
- EP-A- 0 526 403
- FR-A- 1 548 318
- US-A- 4 071 149
- US-B1- 6 182 814

## Beschreibung

Die Erfindung betrifft eine Greifvorrichtung nach dem Oberbegriff des Anspruchs 1.

Eine Greifvorrichtung ist aus der DE 39 06 634 A1 bekannt, bei der mehrere Gegenstände gleichzeitig durch mehrere Sauger aufgreifbar sind. Es ist nicht möglich, mit einem Sauger gleichzeitig oder nacheinander mehrere Gegenstände zur Gruppenbildung aufzunehmen.

Aus der EP 0 532 774 ist eine weitere Greifvorrichtung bekannt, bei der die Saugöffnung über vier am Umkreis angeordnete Greifarme verfügt, die durch das Ansaugen der mit ihnen verbundenen Membran zu dem zu ergreifenden Gegenstand verschwenken und diesen zentriert ergreifen. Mehrere Gegenstände gleichzeitig sind mit dieser Greifvorrichtung nicht zu ergreifen.

Die US 5,457,933 beschreibt eine Greifvorrichtung zum Ergreifen von Früchten, bei der eine Matrix von Sauggreifern eine Vielzahl von geordnet vorliegenden Früchten gleichzeitig ergreift und an einem weiteren Ort ablegen. Die Gegenstände sind nebeneinander in Reihen angeordnet und werden durch eine Vielzahl von Saugern ergriffen.

EP 0 084 479 offenbart eine Saugvorrichtung der eingangs genannten Art zur gleichzeitigen Erfassung von mehreren Flaschen. In einem Sauggrundkörper ist ein Gitter angeordnet, welches als Anschlagelement für die Flaschen dient.

FR 1 548 318 beschreibt eine Greifvorrichtung für plattenförmige Gegenstände, wobei die Greifvorrichtung zwei Seitenwände aufweist und an den zwei anderen Seiten offen ausgebildet ist. An den zwei Seitenwänden sind Luftkanäle gebildet, sodass die plattenförmigen Gegenstände stapelweise ergriffen werden können.

Die US 3,368,324 schliesslich beschreibt eine Greifvorrichtung für Backwaren, die insbesondere auf die Empfindlichkeit der oberen, von dem Sauggreifer zu ergreifenden Oberflächen eingeht, wobei diese Oberflächen insbesondere auch nicht eben sein müssen.

Ausgehend von diesem Stand der Technik liegt der Erfindung die Aufgabe zugrunde, eine Vorrichtung der eingangs genannten Art so weiterzubilden, dass zu ergreifende Gegenstände schonender ergriffen und trotzdem schneller verpackt werden können. Insbesondere ist es auch ein Ziel der Erfindung, bei entsprechenden Produkten wie Nahrungsmittelscheiben eine Gruppenbildung zu ermöglichen und somit die Verpackungsgeschwindigkeit zu erhöhen, ohne die schonende Behandlung der Nahrungsmittelscheiben aufzugeben.

Diese Aufgabe wird erfindungsgemäss für eine Greifvorrichtung mit den Merkmalen des Anspruchs 1 gelöst.

Dadurch, dass der Sauggrundkörper eine gewisse Höhe hat, die grösser ist als ein aufzunehmender Gegenstand, kann direkt in dem einen Zwischenspeicher bildenden Hohlraum des Sauggrundkörpers eine Gruppe gebildet werden.

Damit ist ein Verfahren zum Einsatz einer solchen Greifvorrichtung dadurch gekennzeichnet, dass von einer die zu erfassenden Gegenstände zuführenden Einrichtung mehrere Gegenstände nacheinander von der Greifvorrichtung aufgenommen und unter ständiger Beaufschlagung eines Unterdruckes in dem Sauggrundkörper der Greifvorrichtung zwischengespeichert werden und dass nachfolgend die zwischengespeicherte Gruppe an Gegenständen auf oder in einer die gruppierten Gegenstände wegführenden Einrichtung abgelegt werden.

Da so erst auf dem zuführenden Förderband eine Reihe von Gegenständen aufgenommen werden und dann in einem Zug auf dem wegführenden Förderband oder in einer Packung abgelegt werden, werden die Verfahrenswege stark verkleinert, so dass eine entsprechend ausgerüstete Pickervorrichtung schneller und effizienter arbeiten kann.

Als Gegenstände kommen insbesondere scheibenförmige Gegenstände, zum Beispiel Backwaren wie Biscuits, gefrorene Teigstücke, Muffins, Madeleines oder ähnliche Produkte in Betracht.

Weitere vorteilhafte Ausführungsbeispiele sind in den weiteren Unteransprüchen gekennzeichnet.

In der nachfolgenden Beschreibung werden nun beispielhafte Ausführungsbeispiele der Erfindung im Zusammenhang mit den beigefügten Zeichnungen beschrieben. Es zeigen:
- Fig. 1: eine schematische Darstellung einer Vorrichtung zur Gruppenbildung,
- Fig. 2: einen Querschnitt durch die erfindungsgemässe Greifvorrichtung,
- Fig. 3: eine Schnittansicht in Richtung der Schnittebene III-III der Fig. 2,
- Fig. 4: eine Schnittansicht ähnlich zur Fig. 3 auf eine andere Greifvorrichtung nach der Erfindung,
- Fig. 5: eine perspektivischen Ansicht des zweiten Ausführungsbeispiel nach Fig. 4,
- Fig. 6: eine schematische Ansicht einer Greifvorrichtung gemäss einem dritten Ausführungsbeispiel,
- Fig. 7: eine schematische Ansicht einer Greifvorrichtung gemäss einem vierten Ausführungsbeispiel, und
- Fig. 8: die Greifvorrichtung nach Fig. 2 mit drei angesaugten Nahrungsmittelscheiben.

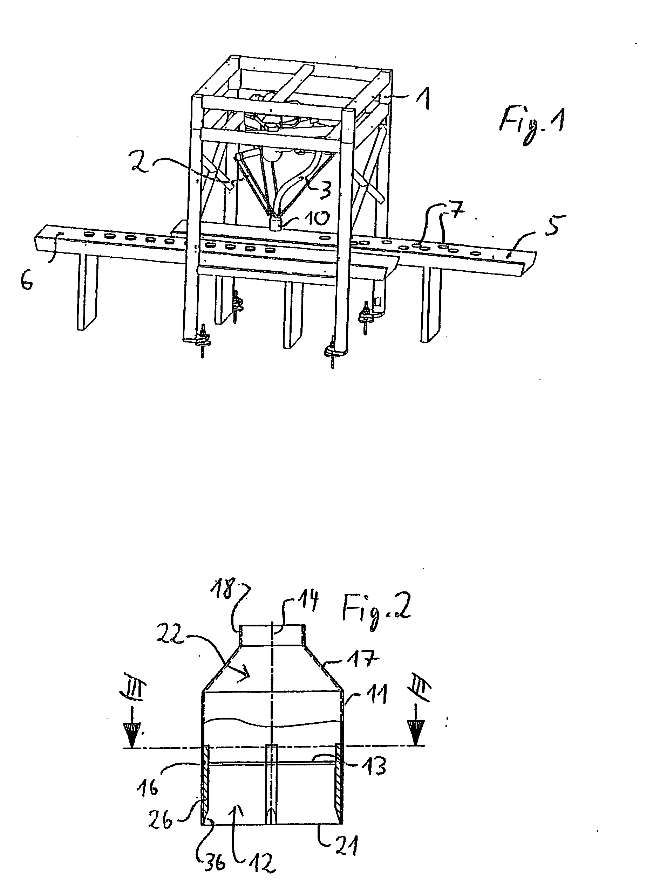

Die Fig. 1 zeigt eine schematische Darstellung einer Vorrichtung zur Gruppenbildung mit einem Gestell 1, an dem eine Pickervorrichtung 2 befestigt ist. Diese Pickervorrichtung 2 verfügt über drei Arme, an deren unterem Ende eine über einen Versorgungsschlauch 3 ansteuerbare Greifvorrichtung 10 befestigt ist. Diese als Saugvorrichtung 10 arbeitende Greifvorrichtung ist in der Zeichnung der Fig. 1 als einen Zylindermantel 11 umfassend dargestellt, der näher in der Fig. 2 zu erkennen ist.

In der Fig. 1 sind des weiteren zwei Förderbänder 5 und 6 dargestellt, die sich auf dem Zeichnungsblatt von rechts nach links bewegen. Auf dem ersten Förderband 5 werden geordnet oder ungeordnet zu ergreifende Nahrungsmittelscheiben 7 in den Bereich des Gestells 1 und damit in den Greifbereich der Pickervorrichtung 2 zugeführt.

Im dargestellten Ausführungsbeispiel sind die Gegenstände ungeordnete Nahrungsmittelscheiben 7, z.B. runde Kekse. Die nachstehend beschriebene Saugvorrichtung 10 kann auch für andere Gegenstände, zum Beispiel ovale Nahrungsmittelscheiben 7, unregelmässig geformte Backwaren wie sogenannte Muffins oder Madeleines, oder auch andere Nichtnahrungsmittelgegenstände eingesetzt werden. Insbesondere können auch mit Abdeckungen wie Glasuren, mit anhaftenden Streuelementen wie Mandelsplitter oder ähnlichem, oder weichen oder harten unregelmässig und nicht glatt ebenen Oberflächen versehene Nahrungsmittel mit dieser Saugvorrichtung 10 ergriffen werden.

Auf dem zweiten Förderband 6 werden die geordneten Nahrungsmittelscheiben 7 aus dem Bereich des Gestells 1 weggeführt. Dabei können, wie in der Fig. 1 dargestellt, jeweils einzelne Nahrungsmittelscheiben 7 oder gruppierte und insbesondere gestapelte Nahrungsmittelscheiben 7 geordnet oder in Behältern abgesetzt fortgeführt werden.

Die Fig. 2 zeigt einen Querschnitt durch die erfindungsgemässe Saugvorrichtung 10. Die Saugvorrichtung 10 ist hohlzylindrisch und verfügt über den zylindrischen Mantel 11. Damit wird ein zylindrischer Hohlraum 12 gebildet, in den die Nahrungsmittelscheiben 7 einsaugbar sind. Der zylindrische Hohlraum 12 hier ist für zylindrische Nahrungsmittelscheiben 7 geeignet und insbesondere auch für Backwaren oder andere Gegenstände, die ein Raumvolumen aufweisen, welches von einem zylindrischen Aussenmantel umgeben werden kann.

Mit dem Bezugszeichen 13 ist eine Trennwand bezeichnet, die senkrecht zur Längsachse 14 der Saugvorrichtung 10 angeordnet ist. Diese Trennwand 13 ist eine kreisförmige Scheibe, deren Durchmesser etwas geringer ist, als der Innendurchmesser des Mantels 11. Damit ist ein schmaler ringförmiger Spalt 15 ausgebildet, der bei einem Durchmesser des Mantels von zum Beispiel 10 Zentimeter beispielsweise zwischen 2 und 5 Millimeter beträgt. Die Trennwand 13 ist über vier in einem Winkelabstand von 90 Grad zueinander angeordneten Stützen 16 an dem Mantel 11 befestigt. Anstelle einer Trennwandscheibe 13 ist es auch möglich, dass ein Kegel vorgesehen ist, dessen Spitze in dem Ansaugraum 22 endet. Dann können auch die Stützen 16 in diesem rückwärtigen Raum angeordnet sein.

Der Mantel 11 geht über einen sich verjüngenden Abschnitt 17 in einen Anschlussstutzen 18 über. Durch den sich verjüngenden Abschnitt 17 in Verbindung mit dem genannten optionalen Spitzkegel ist es möglich, zu gewährleisten, dass ein laminarer Gasfluss durch den Spalt 15 und durch den Raum 17 hindurch in den Anschlussstutzen 18 läuft.

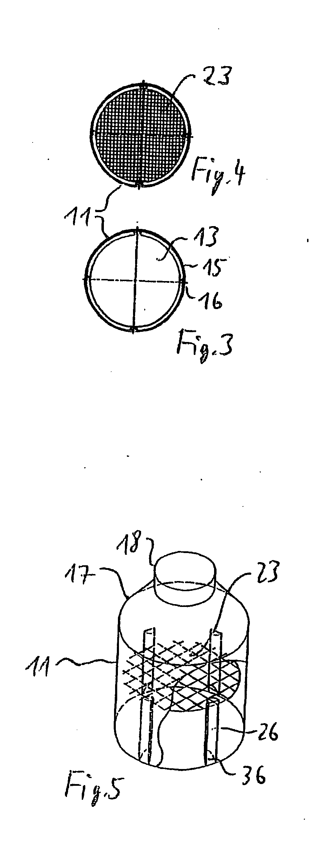

Die Linie III-III in der Fig. 2 zeigt die Schnittebene, von der ausgehend die Schnittansicht der Fig. 3 gebildet worden ist. Dort ist die Trennwand 13 und der Mantel 11 zu erkennen, zwischen denen sich der Spalt 15 befindet, wobei die Stützen 16 die Trennwand 13 mit dem Mantel 11 verbinden. Die vier Stützen 16 sind bei diesem Ausführungsbeispiel in keilförmige Rippen 26 integriert, die sich an ihrem unteren Ende 36 verjüngen und glatt in den unteren Abschnitt und Kante 21 des Mantels 11 übergehen. Die Rippen 26 dienen als Zentriermittel für die anzusaugenden Nahrungsmittelprodukte 7, so dass um diese Nahrungsmittelprodukte 7 herum der Luftspalt 15 sicher bestehen bleibt.

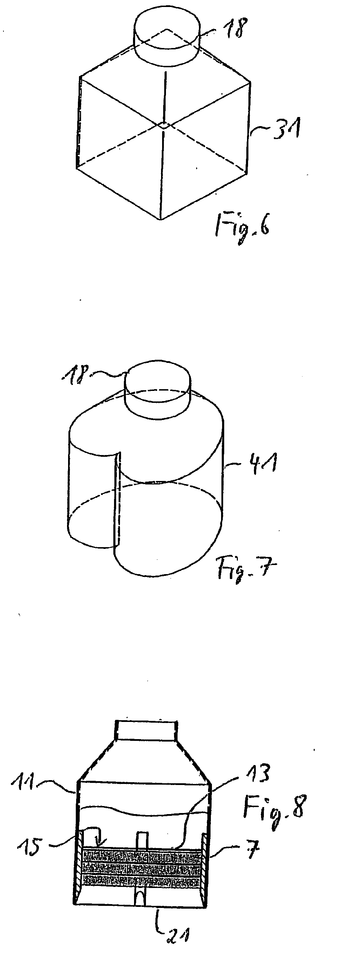

Die Fig. 4 zeigt eine zu der Fig. 3 ähnliche Ansicht eines zweiten Ausführungsbeispiels, bei dem anstelle einer Trennwand 13 ein Sieb oder Gitter 23 vorgesehen ist. Damit ist bei einer leeren Greifvorrichtung ohne angesaugte Gegenstände die offene Ansaugfläche bei dem Ausführungsbeispiel nach der Fig. 4 sehr viel grösser als bei dem Ausführungsbeispiel nach der Fig. 3.

Die Fig. 5 zeigt das zweite Ausführungsbeispiel in einer perspektivischen Ansicht mit dem Gitter 23.

Die Fig. 6 zeigt eine schematische Ansicht einer Saugvorrichtung gemäss einem dritten Ausführungsbeispiel mit einem quadratischen Mantel 31, der für die Aufnahme von quadratischen Nahrungsmittelscheiben vorgesehen ist.

Die Fig. 7 zeigt eine schematische Ansicht eines Saugers gemäss einem vierten Ausführungsbeispiel mit einem herzförmigen Mantel 41, der für die Aufnahme von im Querschnitt herzförmigen Nahrungsmittelscheiben vorgesehen ist. Die Fig. 6 und 7 zeigen zwei Möglichkeiten für äussere Querschnittsformen des Mantels der Greifvorrichtung, die den Raum 12 umgibt, wobei durch den jeweils identischen Anschlussstutzen 18 ein rascher Wechsel der zugehörigen Pickervorrichtung auf eine beliebige Querschnittsform des Produktes möglich ist. Eine Anpassung an beliebige weitere unterschiedliche Produktformen ist möglich, wie beispielsweise mit einem ovalen oder rechteckigen Querschnitt.

Die Funktion der Saugvorrichtung, die gemäss der Erfindung und insbesondere gemäss einer der Fig. aufgebaut ist, ist jeweils gleich. Insbesondere ist der Durchmesser des Siebes 23 oder der Trennwand 13 im wesentlichen gleich gross wie der Durchmesser des anzusaugenden Produktes, so dass die Saugfläche grösser als der Querschnitt der Produktfläche ist. Wenn der untere Rand 21 des Mantels 11 über ein Produkt bewegt wird und dabei ständig oder bei einem erstmaligen Eintreten dieses Ereignisses über den Ansaugstutzen 28 und den Ringspalt 15 ein Unterdruck in dem Aufbewahrungsraum 12 erzeugt wird, wird durch diesen Unterdruck das Produkt von dem Förderband 5 angehoben und zwischen den Wänden des Mantels 11, zentriert durch die Rippen 26 in Richtung auf die Trennwand 13 zu bewegt. Wenn ein erstes Produkt angesaugt ist, ruht dieses gegen den unteren Rand des Siebes 23 oder der Trennwand 13 und wird durch den bestehenden Ansaugdruck an dem Element 23 oder 13 gehalten. Dabei wird der am Ringspalt 15 bestehende Unterdruck durch den zwischen dem Mantel 11 oder 31 oder 41 und dem Nahrungsmittelprodukt bestehenden Ring weiter aufrechterhalten und gestattet das Ansaugen eines weiteren Nahrungsmittelproduktes. Dieses zweite und weitere, beispielsweise bis zu vier, Nahrungsmittelprodukte werden dann übereinander in dem Mantel 11 oder 31 oder 41 gehalten, der eine entsprechende Höhe aufweist, d.h. mindestens das entsprechende Vielfache der Dicke des scheibenförmigen Nahrungsmittelproduktes. Damit ergibt sich eine hohe Effizienz, da die Produktgruppe in der Saugvorrichtung innerhalb des Mantels 11 gebildet und anschliessend als ganzes abgelegt wird. Dies hat pro Gruppenbildung einen gegenüber konventionellen Pickervorrichtungen mit einem üblichen bekannten Sauger kürzeren Weg zur Folge, den der Kopf der Pickervorrichtung, also die Greifvorrichtung, zurücklegen muss, da bei der Gruppenbildung zuerst nur kurze Wege über dem Förderband 5 zurückgelegt werden und erst anschliessend der Weg zum Förderband 6 einmalig hin- und zurückgelegt wird, um die Gruppe von Nahrungsmittelprodukten als solche abzulegen.

Bei einem solchen Verfahren zum Einsatz einer Greifvorrichtung 10 kann der untere Rand des Sauggrundkörpers 11 der Greifvorrichtung in einem konstanten Abstand über die zu erfassenden Gegenstände 7 des Förderbandes 5 nach einem vorbestimmten Muster bewegt werden, im einfachsten Fall hin und her quer zur Bewegungsrichtung des Förderbandes 5. Diese Bewegung kann auch durch eine Steuerung über eine Bilderfassungsvorrichtung für auf dem Förderband 5 liegende Gegenstände 7 ersetzt oder abgeändert werden. Es kann durch Zählen der aufgesaugten Gegenstände 7 durch die beispielsweise durchsichtigen Mantelwände 11 hindurch oder auf eine andere Weise festgestellt werden, dass die Gruppenbildung abgeschlossen ist und die fertiggestellte Gruppe kann dann zum weiteren zweiten Förderband 6 bewegt und abgesetzt werden. Dieses Absetzen kann in regelmässigen räumlichen Abständen, wie in der Fig. 1 dargestellt, geschehen oder in unregelmässigen Abständen.

Die Nahrungsmittelprodukte können auch empfindliche Produkte sein, wie ein Nahrungsmittelprodukt mit einer Abdeckung aus Mandelsplittern oder mit anderen Elementen wie Dekorationselementen auf Zuckerbasis, oder sie können beispielsweise Glasuren auf der Oberseite aufweisen. Allgemein kann man diese als Produkte mit Partikeln auf der Oberseite bezeichnen. Beim Saugvorgang stösst die Oberseite an die geeignet beschichtete Unterseite und/oder nachgiebig ausgestaltete Unterseite der Trennwand 13. Die Beschichtung kann beispielsweise Teflon oder ein Moosgummibelag sein oder die Trennwand 13 ist beweglich federnd aufgehängt, insbesondere auch mit einer Dämpfung.

Die Fig. 8 zeigt die Saugvorrichtung nach Fig. 2 mit drei angesaugten Nahrungsmittelscheiben 7, die gegen die Unterseite der Trennwand 13 ruhen. Es ist bei dieser Höhe des Mantels 11 noch möglich, eine vierte Nahrungsmittelscheibe 7 anzusaugen, wobei während des gesamten Ansaugvorganges und des Transportes der gruppierten Nahrungsmittelscheiben 7 zu dem zweiten Förderband 6 ein Unterdruck an dem Anschlussstutzen 18 anliegt, so dass durch den ständigen Luftfluss an den Rändern der Nahrungsmittelscheiben 7 vorbei und durch den Ringspalt 15 die Nahrungsmittelscheiben 7 in der in der Fig. 8 dargestellten Lage gehalten werden.

Neben dieser Möglichkeit des Gruppierens von mehreren Nahrungsmittelprodukten ist es auch möglich, ein einzelnes empfindliches Produkt anzusaugen. Dies kann beispielsweise ein sogenannter Muffin oder Madeleine sein, wobei die Trennwand 13 dann entsprechend der Oberfläche des Nahrungsmittelproduktes gewölbt sein kann. Weiterhin können mehrere, bereits vorgruppierte Nahrungsmittelprodukte als ganzes erfasst werden.

## Patentansprüche

1. Greifvorrichtung zum Erfassen von Gegenständen (7), mit einem, einem zu erfassenden Gegenstand (7) zugeordneten, mit Unterdruck zu beaufschlagenden und mit einer Saugöffnung (21) gegenüber einer Oberfläche des anzusaugenden Gegenstandes (7) angeordneten Sauggrundkörper (11, 31, 41), mit einer dem Sauggrundkörper (11, 31, 41) zugeordneten, den Unterdruck erzeugen-den Ansaugquelle, und mit einem in einem vorbestimmten Abstand zu der Saugöffnung (21) in dem Sauggrundkörper (11, 31, 41) vorgesehenen Anschlagkörper (13, 23), **dadurch gekennzeichnet, dass** der Anschlagkörper (13, 23) im Querschnitt eine Umfangsform aufweist, die zwischen dem Rand des Anschlagkörpers (13, 23) und dem Sauggrundkörper (11, 31, 41) gegenüber dem besagten Sauggrundkörper (11, 31, 41) zumindest an gegenüberliegenden Abschnitten im wesentlichen einen Spalt (15) ausbildet, so dass sich zwischen der Innenwand des Sauggrundkörpers (11, 31, 41) und angesaugten Gegenständen (7) an diesen besagten Abschnitten ein Strömungskanal (15) ausbildet, wobei längs der Innenwand des Sauggrundkörpers (11, 31, 41) in Umfangsrichtung in regelmässigen Abständen mindestens drei Zentriermittel (26) vorgesehen sind, die sich von dem unteren Rand (21) des Sauggrundkörpers (11, 31, 41) ausgehend bis mindestens zum Anschlagkörper (13,23) erstrecken.

2. Greifvorrichtung nach Anspruch 1, **dadurch gekennzeichnet, dass** der Anschlagkörper eine Wand (13) oder ein Sieb (23) ist.

3. Greifvorrichtung nach einem der vorstehenden Ansprüche, **dadurch gekennzeichnet, dass** der Sauggrundkörper (11, 31, 41) aus Kunststoff oder aus lebensmitteltauglichem Kunststoff und/oder aus durchsichtigem Material hergestellt ist und/oder dass der Anschlagkörper (13, 23) an seiner dem unteren Rand des Sauggrundkörpers (11, 31, 41) zugewandten Seite mit einem nicht anhaftenden Material beschichtet ist.

4. Greifvorrichtung nach einem der vorstehenden Ansprüche, **dadurch gekennzeichnet, dass** der Sauggrundkörper (11, 31, 41) im Querschnitt und die Unterseite des Anschlagkörpers (13, 23) rund, oval, rechteckig, quadratisch (31), herzförmig (41) oder einer sonstigen Gegenstandsform entsprechend ist.

5. Greifvorrichtung nach einem der vorstehenden Ansprüche, **dadurch gekennzeichnet, dass** der Sauggrundkörper (11, 31, 41) sich zu einem Anschlussstutzen (18) hin verjüngt.

6. Greifvorrichtung nach Anspruch 5, **dadurch gekennzeichnet, dass** der Anschlagkörper (13, 23) eine Kegelform aufweist, so dass sich beim Absaugen hinter dem Spalt (15) bis zum Anschlussstutzen (18) hin ein laminarer Luftfluss ergibt.

7. Verfahren zum Einsatz einer Greifvorrichtung nach einem der vorstehenden Ansprüche, **dadurch gekennzeichnet, dass** von einer die zu erfassenden Gegenstände (7) zuführenden Einrichtung (5) mehrere Gegenstände (7) nacheinander von der Greifvorrichtung (10) aufgenommen und unter ständiger Beaufschlagung eines Unterdruckes in dem Sauggrundkörper (11, 31, 41) der Greifvorrichtung (10) zwischengespeichert werden und dass nachfolgend die zwischengespeicherte Gruppe an Gegenständen (7) auf oder in einer die gruppierten Gegenstände (7) wegführenden Einrichtung (6) abgelegt werden.

8. Verfahren nach Anspruch 7, **dadurch gekennzeichnet, dass** der untere Rand des Sauggrundkörpers (11, 31, 41) der Greifvorrichtung (10) in einem konstanten Abstand über die zu erfassenden Gegenstände (7) der zuführenden Einrichtung (5) nach einem vorbestimmten Muster bewegt wird.

## Claims

1. Gripping apparatus for gripping articles (7), having a basic suction body (11, 31, 41) which is assigned to an article (7) to be gripped, which can be subjected to negative pressure and which has a suction opening (21) arranged opposite a surface of the article (7) to be attached by suction, having a suction-attachment source which is assigned to the basic suction body (11, 31, 41) and generates the negative pressure, and having a stop body (13, 23) which is provided at a predetermined spacing from the suction opening (21) in the basic suction body (11, 31, 41), **characterized in that** the stop body (13, 23), as seen in cross section, has a circumferential shape which, between the edge of the stop body (13, 23) and the basic suction body (11, 31, 41), essentially forms a gap (15) in relation to the said basic suction body (11, 31, 41), at least along opposite sections, in which case a flow channel (15) forms along these said sections, between the inner wall of the basic suction body (11, 31, 41) and suction-attached articles (7), it being the case that at least three centring means (26) are provided at regular intervals in the circumferential direction along the inner wall of the basic suction body (11, 31, 41) and, starting from the bottom edge (21) of the basic suction body (11, 31, 41), these centring means extend at least up to the stop body (13, 23).

2. Gripping apparatus according to Claim 1, **characterized in that** the stop body is a wall (13) or a screen (23).

3. Gripping apparatus according to one of the preceding claims, **characterized in that** the basic suction body (11, 31, 41) is produced from plastic or from foodstuff-compatible plastic and/or from transparent material, and/or **in that**, on its side which is directed towards the bottom edge of the basic suction body (11, 31, 41), the stop body (13, 23) is coated with a non-stick material.

4. Gripping apparatus according to one of the preceding claims, **characterized in that** the basic suction body (11, 31, 41), as seen in cross section, and the underside of the stop body (13, 23) is round, oval, rectangular, square (31), heart-shaped (41) or corresponds to some other shape of article.

5. Gripping apparatus according to one of the preceding claims, **characterized in that** the basic suction body (11, 31, 41) tapers in the direction of a connection stub (18).

6. Gripping apparatus according to Claim 5,
**characterized in that** the stop body (13, 23) is conical, in which case a laminar air flow is produced downstream of the gap (15), as far as the connection stub (18), during suction operation.

7. Method of using a gripping apparatus according to one of the preceding claims, **characterized in that**, from an arrangement (5) which feeds the articles (7) to be gripped, a plurality of articles (7) are received one after the other by the gripping apparatus (10) and are stored on an interim basis while being constantly subjected to negative pressure in the basic suction body (11, 31, 41) of the gripping apparatus, and **in that** the interim-storage group of articles (7) is then deposited on or in an arrangement (6) for removing the grouped articles (7).

8. Method according to Claim 7, **characterized in that** the bottom edge of the basic suction body (11, 31, 41) of the gripping apparatus (10) is moved in a predetermined pattern, at a constant spacing, above the articles (7) of the feeding arrangement (5) which are to be gripped.

## Revendications

1. Dispositif de préhension pour saisir des objets (7) comprenant un corps de base aspirant (11, 31, 41) associé à l'objet (7) à saisir, mis en dépression et comportant une ouverture d'aspiration (21) en regard de la surface supérieure de l'objet (7) à aspirer, une source d'aspiration créant une dépression associée au corps de base aspirant (11, 31, 41) et un organe de butée (13, 23) à une distance prédéterminée par rapport à l'ouverture d'aspiration (21), dans le corps de base aspirant (11,31,41),
**caractérisé en ce que**
l'organe de butée (13, 23) a en section une forme périphérique qui développe entre le bord de l'organe de butée (13, 23) et le corps de base aspirant (11, 31, 41), pratiquement un intervalle (15) au niveau de segments opposés, en regard du corps de base aspirant (11, 31, 41) de façon à créer au niveau des segments, un canal d'écoulement (15) entre la paroi intérieur du corps de base aspirant (11, 31, 41) et les objets (7) aspirés,
et le long de la paroi intérieure du corps de base aspirant (11, 31, 41), dans la direction périphérique, à intervalles réguliers, on a au moins trois moyens de centrage (26) qui s'étendent à partir du bord inférieur (21) du corps de base aspirant (11, 31, 41) au moins jusqu'au niveau de l'organe de butée (13, 23).

2. Dispositif de préhension selon la revendication 1,
**caractérisé en ce que**
l'organe de butée est une paroi (13) ou un tamis (23).

3. Dispositif de préhension selon l'une des revendications précédentes,
**caractérisé en ce que**
le corps de base aspirant (11, 31, 41) est en matière plastique ou en une matière plastique alimentaire et/ou en une matière transparente et/ou l'organe de butée (13, 23) est muni d'une matière non adhérente sur sa face tournée vers le bord inférieur du corps de base aspirant (11, 31, 41).

4. Dispositif de préhension selon l'une des revendications précédentes,
**caractérisé en ce que**
en section le corps de base aspirant (11, 31, 41) de même que la face inférieure de l'organe de butée (13, 23), ont une forme ronde, ovale, rectangulaire, carrée (31), en forme de cardioïde (41) ou autre forme d'objets.

5. Dispositif de préhension selon l'une des revendications précédentes,
**caractérisé en ce que**
le corps de base aspirant (11, 31, 41) va en rétrécissant vers un ajutage de branchement (18).

6. Dispositif de préhension selon la revendication 5,
**caractérisé en ce que**
l'organe de butée (13, 23) a une forme conique si bien qu'en aspirant il se développe un flux d'air laminaire derrière l'intervalle (15) jusqu'à l'ajutage de branchement (18).

7. Procédé de mise en oeuvre d'un dispositif de préhension selon l'une des revendications précédentes,
**caractérisé en ce qu'**
plusieurs objets (7) sont pris successivement par le dispositif de préhension (10) sur une installation (5) fournissant les objets (7) à saisir, et en maintenant en permanence une dépression dans le corps de base d'aspiration (11, 31, 41) ils sont retenus de façon intermédiaire dans le dispositif de préhension (10) et ensuite les groupes d'objets retenus de manière intermédiaire sont déposés sur ou dans une installation d'évacuation (6) des objets groupés (7).

8. Procédé selon la revendication 7,
**caractérisé en ce que**
le bord inférieur du corps de base aspirant (11, 31, 41) du dispositif de préhension (10) se déplace suivant un trajet déterminé, à distance constante au dessus de l'installation (5) qui fournit les objets (7) à saisir.
